## Europäisches Patentamt

## European Patent Office

## Office européen des brevets

(19)

(11) Veröffentlichungsnummer: **0 192 605**
**B1**

(12) EUROPÄISCHE PATENTSCHRIFT

(45) Veröffentlichungstag der Patentschrift:
**13.07.88**

(21) Anmeldenummer: **86810059.5**

(22) Anmeldetag: **04.02.86**

(51) Int. Cl.⁴: **B 65 B 51/30,** B 29 C 65/02

(54) **Verschliessvorrichtung an einer Schlauchbeutelmaschine mit Schweiss- und/oder Siegelbacken.**

(30) Priorität: **18.02.85 CH 738/85**

(43) Veröffentlichungstag der Anmeldung:
**27.08.86 Patentblatt 86/35**

(45) Bekanntmachung des Hinweises auf die Patenterteilung:
**13.07.88 Patentblatt 88/28**

(84) Benannte Vertragsstaaten:
**AT BE DE FR GB IT NL SE**

(56) Entgegenhaltungen:
**AT - B - 347 346**
**DE - B - 1 271 615**
**FR - A - 950 001**

(73) Patentinhaber: **ILAPAK Research & Development S.A.,
Viale C. Cattaneo II, CH-6900 Lugano (CH)**

(72) Erfinder: **Klinkel, Wolfgang, Sala Capriasca,
Ch-6951 Bigorio (CH)**

(74) Vertreter: **Bosshard, Ernst, Schulhausstrasse 12,
CH-8002 Zürich (CH)**

EP 0 192 605 B1

ACTORUM AG

**Beschreibung**

Die Erfindung bezieht sich auf eine Verschliessvorrichtung an einer Schlauchbeutelmaschine mit Schweiss- und/oder Siegelbacken, von denen mindestens eine bewegbar ist, wobei mindestens eine Schweiss- oder Siegelbacke mit einem Druckpolster zusammenwirkt, dessen Druckkraft veränderbar ist.

Ferner bezieht sich die Erfindung auf ein Verfahren zum Betrieb der Verschliessvorrichtung einer Schlauchbeutelmaschine.

Das Verschliessen von Beuteln, bzw. Packungen durch vertikale und horizontale Schlauchbeutelmaschinen erfolgt üblicherweise durch zwei gegeneinander andrückbare Siegel- oder Schweisswerkzeuge zwischen denen sich der zu verschliessende Beutel befindet. Für eine optimale Siegel- bzw. Schweissnaht sind drei Parameter wichtig: Zeit, Temperatur und Druck.

Die beiden ersten Parameter sind klar definierbar, erstens über die Konstruktion und zweitens durch die Anwendung von elektronischen Regelgeräten für die Temperatur mit Anzeige. Die Druckeinstellung — also der bei der Siegelung oder Schweissung auf die Folie ausgeübte Druck — erfolgt dagegen rein empirisch und wird von einer Bedienungsperson nach Erfahrung eingestellt, da der Wert je nach Folienart und Folienstärke schwankt und nicht genau reproduzierbar ist. Dadurch wird es bei unterschiedlichen Foliensorten oder einem Wechsel der Foliendicke nötig, in aufwendiger Weise den entsprechenden optimalen Anpressdruck zu ermitteln.

Aus der FR-A-950 001, von der im Oberbegriff ausgegangen wird, ist bereits eine Verschliessvorrichtung bekannt, bei der durch ein hydraulisches Druckpolster die Klemmkraft der Zange verändert werden kann. Die Einstellung der Druckkraft erfolgt dabei von Hand durch eine Stellschraube.

Ferner ist es aus der AT-B 347 346 bekannt, die Steuerung der Grösse und die Dauer des Siegeldruckes durch einen Kniehebel vorzunehmen, der an einem Ende an einen Luftzylinder angelenkt ist, wodurch der Druckaufbau in besonders kurzer Zeit erfolgt.

Es ist Aufgabe der Erfindung, eine Verschliessvorrichtung zu schaffen, die es ermöglicht, einen Sollwert für den Anpressdruck der Schweiss- und/oder Siegelbacken während des Schweiss- oder Siegelungsvorganges vorzugeben, diesen genau einzuhalten und zu reproduzieren.

Diese Aufgabe wird dadurch gelöst, dass die Druckkraft des Druckpolsters mittels eines Steuer- und Regelkreises mit Sollwertvorgabe veränderbar ist.

Das Verfahren zum Betrieb ist dadurch gekennzeichnet, dass die Druckkraft des Druckpolsters durch einen Steuer- und Regelkreis auf einen vorbestimmten Wert während des Schweiss- oder Siegelungsvorganges erfolgt.

Dadurch ist es möglich, den Druck während des Siegelungs- oder Schweissvorganges automatisch und exakt dem gewünschten Sollwert anzugleichen. Dies ergibt eine wesentliche Vereinfachung bei der Maschineneinrichtung und bei einem Wechsel der Folienart oder Foliendicke, so dass die hergestellten Schweiss- bzw. Siegelnähte keine Qualitätsunterschiede aufweisen.

Nachfolgend wird die Erfindung anhand eines Ausführungsbeispieles näher erläutert. Es zeigen:

Fig. 1 eine schematische Darstellung der Verschliessvorrichtung mit mechanischem Antrieb,

Fig. 2 eine Ausführungsvariante der Verschliessvorrichtung mit pneumatischem oder hydraulischem Antrieb,

Fig. 3 eine weitere Ausführungsvariante mit pneumatischem oder hydraulischem Antrieb.

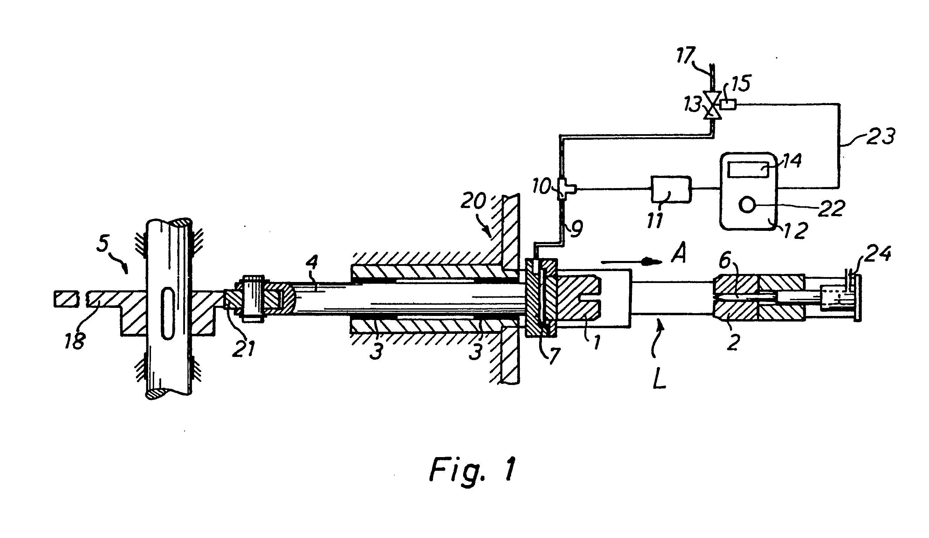

Die Verschliessvorrichtung gemäss Fig. 1 enthält ein Maschinengehäuse 20, einen mechanischen Antrieb 5 mit einer Kurvenscheibe und zwei Schweissbacken 1, 2. Bei geöffnet Stellung befindet sich zwischen den Enden der Schweissbacken 1, 2 ein Leerraum L, durch den von oben die nicht näher dargestellte schlauchartige Folie hindurchgeführt wird. Die erste Schweissbacke 1 ist mittels einer Führungsstange 4 und mehreren Lagern 3 geradlinig geführt, so dass sie sich in Richtung des Pfeiles A der festen, zweiten Schweissbacke 2 nähern kann. Diese Schliessbewegung wird durch die Verdrehung der Kurvenscheibe 18 über eine in der Führungsstange 4 gelagerte Rolle 21 bewirkt. Anstelle einer Kurvenscheibe 18 könnte auch eine Kurbel zum Antrieb der Führungsstange 4 vorgesehen werden.

Die erste Schweissbacke 1 wirkt über ein Luft- oder Ölkissen 7 mit der Führungsstange 4 zusammen. Die Führungsstange 4 und die erste Schweissbacke 1 bilden also nicht ein starres Element, sondern das Luft- oder Ölkissen 7 ermöglicht einen veränderbaren Anpressdruck gegen die Folie in der Schweissposition. Über die Druckleitung 9 und eine Verzweigungsstelle 10 steht das Druckkissen 7 einerseits mit einem Transducer 11 und einem Analog-/Digitalwandler 12 in Verbindung und wird andererseits durch ein Regelventil 13 mit Druckluft oder Drucköl versorgt, das durch ein Servo-Stellglied 15 beeinflusst werden kann.

Mit dem Transducer 11 wird der im Druckkissen 7 gemessene Druck in eine elektrische Grösse gewandelt, die durch den Wandler 12 digitalisiert und mittels eines Anzeigefeldes 14 optisch angezeigt wird. Der Wandler 12 ist überdies mit einem programmierbaren, computerartigen Rechner versehen oder verbunden, welcher den gewünschten Sollwert mit dem festgestellten Istwert vergleicht und über die Leitung 23 Steuerbefehle für das Stellglied 15 des Regelventils 13 ausgibt, falls keine Übereinstimmung besteht.

Der Wandler 12 enthält ein Eingabeorgan 22, das erlaubt, einen gewünschten Sollwert für den Druck im Druckkissen 7 vorzugeben. Dieser Sollwert kann ebenfalls im Anzeigefeld 14 angezeigt werden. Das Regelventil 13 ist als Proportionalventil ausgebildet. Mit dem Servo-Stellglied 15 kann somit eine Druckmittel-Zufuhr oder -Abfuhr über die Leitung 17 mit Hilfe des Regelventils 13 gesteuert und damit der Druck im Luft- oder Ölkissen verändert werden. Der Transducer 11, der Wandler 12 mit seinem Anzeigefeld 14, das Eingabeorgan 22 und das Regelventil 13 mit Servo-Stellglied 15 bilden also einen Rückkopplungs-Steuer- und Regelkreis für das Druckkissen 7. Dadurch kann während des Schweiss- oder Siegelungsvorganges ein exakter und genau reproduzierbarer, vorgegebener Druck im Druckkissen 7 eingehalten oder gegebenenfalls verändert werden. Die Folie zwischen den beiden Schweissbacken 1, 2 wird also immer unter gleichen Bedingungen geschweisst oder gesiegelt und mühsame manuelle Anpassungen für verschiedene Foliensorten entfallen. Die Druckwerte können in je einer Programmspeicherung abgespeichert und bei Bedarf wieder abgerufen oder eingegegen werden.

Zum Trennen der einzelnen Packungen nach dem Schweiss- oder Siegelungsprozess ist ein Messer 6 in der zweiten Schweissbacke 2 integriert, wobei die Verstellung durch Zufuhr eines pneumatischen oder hydraulischen Druckmittels über einen Anschluss-Stutzen 24 erfolgt.

Die Schweiss- oder Siegelbacken 1, 2 sind in konventioneller Weise mit nicht näher dargestellten elektrischen Heizorganen versehen, zur Erwärmung der Folie auf Schweiss- oder Siegeltemperatur. Bei einer Schweissung erfolgt eine unlösbare Verschmelzung des thermoplastischen Folienmaterials an der Schweissnaht; bei einer Siegelung wird eine auf das Folienmaterial aufgebrachte, dünne Schicht durch Wärmeeinwirkung verklebt.

Die Schweiss- oder Siebelbacken sind so ausgebildet, dass eine durch das Messer 6 trennbare Doppel-Schweissnaht entsteht, d.h. am gefüllten Beutel wird eine den Beutel oben verschliessende Schliessnaht gebildet und zugleich wird für den nächsten Beutel unten eine Bodennaht erzeugt. Hernach werden die Schweiss- oder Siegelbacken 1, 2 wieder geöffnet, der Beutel mit Verpackungsgut gefüllt und der Beutel kontinuierlich oder schrittweise um die vorgegebene Beutellänge weiter transportiert.

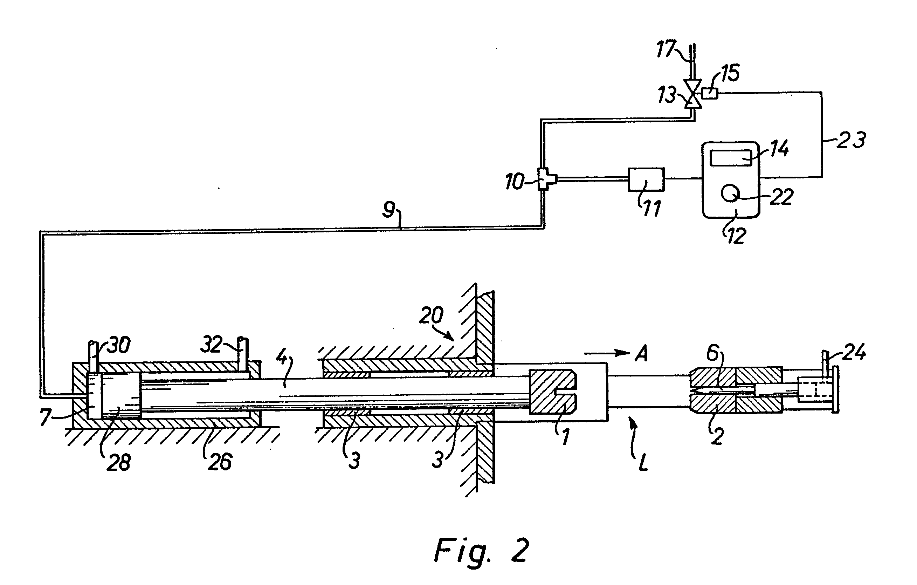

In Fig. 2 ist eine Ausführungsvariante dargestellt, bei welcher eine pneumatisch oder hydraulisch betätigte Bewegung der Führungsstange 4 und damit der Schweiss- oder Siegelbacke 1 erfolgt. Mit der Führungsstange 4 ist ein in einem Zylinder 26 beweglicher, doppeltwirkender Kolben 28 verbunden. Beidseits des Kolbens 28 ist je ein Anschluss 30, 32 für die Zufuhr oder Abfuhr des pneumatischen oder hydraulischen Druckmittels vorhanden. Die eine Regulierung des Druckes bewirkende Druckleitung 9 mündet hier in den Druckraum 7 des Zylinders 26 hinter dem Kolben 28 ein, so dass der Druck welcher auf die Schweiss- oder Siegelbacken 1, 2 wirkt, wenn eine Folie dazwischenliegt, allenfalls verändert werden kann, wie dies im Zusammenhang mit Fig. 1 erwähnt wurde.

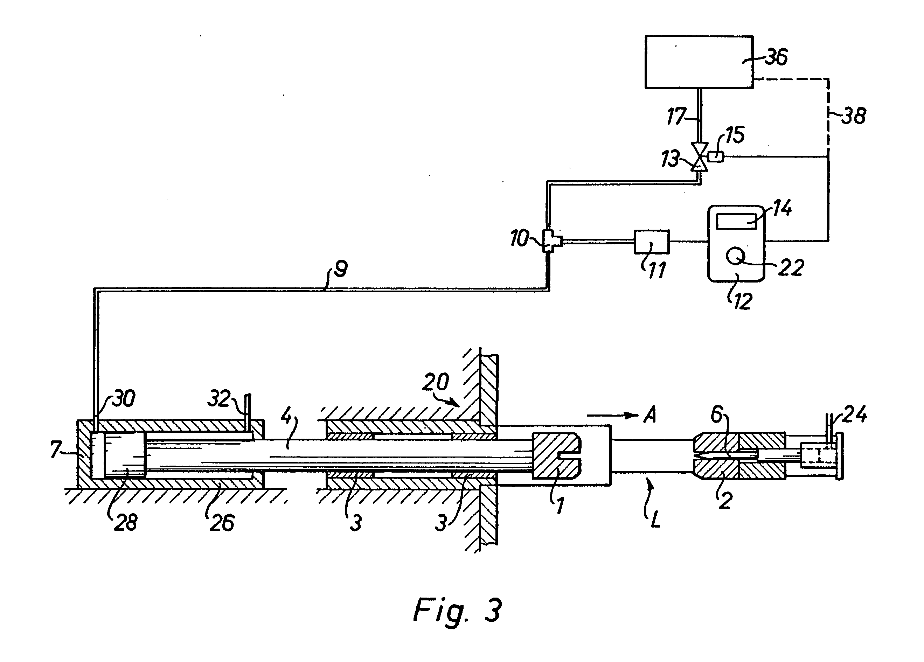

Das Regelventil 13 mit Servo-Steuerorgan 15 könnte auch direkt in der Speiseleitung 9 des Zylinder-Kolben-Aggregates 26, 28 liegen, wie dies aus Fig. 3 hervorgeht. Die Zuleitung 17 ist mit einem Druckerzeuger 36 verbunden.

Eine weitere Variante besteht darin, dass der Transducer 11 über eine Rückkoppelungsschleife 38 mit dem Antriebsmotor der Druckquelle 36 verbunden ist, so dass für eine Druckerhöhung der Motor eingeschaltet wird und für eine Druckverminderung ein Ablassventil geöffnet wird.

Die übrige Ausbildung entspricht auch hier derjenigen gemäss Fig. 1, wobei gleiche Bezugszahlen gleiche Teile bezeichnen.

**Patentansprüche**

1. Verschliessvorrichtung an einer Schlauchbeutelmaschine mit Schweiss- und/oder Siegelbacken (1, 2), von denen mindestens eine bewegbar ist, wobei mindestens eine Schweiss- oder Siegelbacke (1, 2) mit einem Druckpolster (7) zusammenwirkt, dessen Druckkraft veränderbar ist, dadurch gekennzeichnet, dass die Druckkraft des Druckpolsters mittels eines Steuer- und Regelkreises (9-17) mit Sollwertvorgabe veränderbar ist.

2. Verschliessvorrichtung nach Anspruch 1, dadurch gekennzeichnet, dass die eine Schweiss- oder Siegelbacke (1) mechanisch über eine Führungsstange (4) mittels einer Kurvenscheibe (5) oder einem Kurbelarm geradlinig gegen eine zweite, feste Schweiss- oder Siegelbacke (2) bewegbar ist und das Druckpolster (7) zwischen der Führungsstange (4) und der Schweiss- oder Siegelbacke (1) angeordnet ist.

3. Verschliessvorrichtung nach Anspruch 1 oder 2, dadurch gekennzeichnet, dass das Druckpolster (7) als Luftkissen ausgebildet ist.

4. Verschliessvorrichtung nach einem der Ansprüche 1 bis 3, dadurch gekennzeichnet, dass der Druck im Druckpolster (7) durch ein Regelventil (13) veränderbar ist, das in einem Rückkoppelungskreis (11, 12, 15) mit einstellbarem Sollwert angeordnet ist.

5. Verschliessvorrichtung nach Anspruch 4, dadurch gekennzeichnet, dass der Rückkoppelungskreis (11, 12, 15) einen Transducer (11) für die Umwandlung des Druckes in ein elektrisches Signal und einen Analog-/Digitalwandler für die digitale Anzeige dieser gewandelten Grösse und für die digitale Sollwertvorgabe der Regelgrösse enthält.

6. Verschliessvorrichtung nach einem der Ansprüche 1, 3 bis 5, dadurch gekennzeichnet, dass der Antrieb (5) der Schweiss- und/oder Siegelbacken durch ein pneumatisches oder hydraulisches Druckelement (26, 28) erfolgt, in welchem das Druckpolster (7) integriert ist.

7. Verfahren zum Betrieb der Verschliessvorrichtung einer Schlauchbeutelmaschine mit Schweiss- und/oder Siegelbacken (1, 2), die zur Ausübung eines Schliessdruckes einander andrückbar sind unter Zwischenschaltung eines Druckpolsters (7), dadurch gekennzeichnet, dass die Druckkraft des Druckpolsters (7) durch einen Steuer- und Regelkreis (9-17) auf einen vorbestimmten Wert während des Schweiss- oder Siegelungsvorganges erfolgt.

**Claims**

1. A sealing device on a bag filling machine with welding and/or sealing jaws (1, 2), of which at least one is mobile, whereby at least one welding or sealing jaw (1, 2) co-operates with a pressure cushion (7), the pressing power of which is variable, characterised in that the pressing power of the pressure cushion can be varied by means of a control control or regulating circuit (9-17) with a setpoint input.

2. A sealing device according to claim 1, characterised in that one welding or sealing jaw (1) can be moved mechanically via a guide rod (4) by means of a cam (5) or a crank arm linearly towards a second fixed welding or sealing jaw (2) and the pressure cushion (7) is arranged between the guide rod (4) and the welding or sealing jaw (1).

3. A sealing device according to claim 1 or 2, characterised in that pressure cushion (7) is designed as an air cushion.

4. A sealing device according to any one of the claims 1 to 3, characterised in that the pressure in the pressure cushion (7) can be varied by means of a control valve (13), which is arranged in a feedback circuit (11, 12, 15) with an adjustable setpoint value.

5. A sealing device according to claim 4, characterised in that the feedback circuit (11, 12, 15) contains a transducer (11) for converting the pressure into an electrical signal and an analog/digital converter for the digital display of this converted magnitude and for the digital setpoint input of the controled variable.

6. A sealing device according to any one of claims 1, 3 to 5, characterised in that the drive (5) of the welding and/or sealing jaws takes place by means of a pneumatic or hydraulic pressure element (26, 28), in which the pressure cushion (7) is integrated.

7. A method for operating the sealing device of a bag filling machine with welding and/or sealing jaws (1, 2), which can be pressed against one another to exert the sealing pressure by including a pressure cushion (7), characterised in that the pressing power of the pressure cushion (7) is held by means of a control or regulating circuit (9-17) at a predetermined value during the welding or sealing operation.

## Revendications

1. Dispositif de fermeture dans une machine de formation de sachets à partir d'une bande tubulaire, ayant des mâchoires de soudage et/ou de scellement dont l'une au moins est mobile, au moins une mâchoire de soudage ou de scellement (1, 2) coopérant avec un coussin de pression (7) dont la force de pression est variable, caractérisé en ce que la force de coussin de pression peut être modifiée au moyen d'un circuit de commande et de réglage (9 à 17) avec prescription d'une valeur de consigne.

2. Dispositif de fermeture suivant la revendication 1, caractérisé en ce que l'une des mâchoires de soudage ou de scellement (1) peut être déplacée mécaniquement en ligne droite par une tige de guidage (4) au moyen d'une came ou d'une manivelle vers une seconde mâchoire de soudage ou de scellement (2) fixe et le coussin de pression est interposé entre la tige de guidage (4) et la mâchoire (1) de soudage ou de scellement.

3. Dispositif de fermeture suivant la revendication 1 ou 2, caractérisé en ce que le coussin de pression (7) est constitué en coussin d'air.

4. Dispositif de fermeture suivant l'une des revendications 1 à 3, caractérisé en ce que la pression dans le coussin de pression (7) peut être modifiée par une soupape de réglage (13) qui est montée dans un circuit à réaction (11, 12, 15) avec une valeur de consigne réglable.

5. Dispositif de fermeture suivant la revendication 4, caractérisé en ce que le circuit à réaction (11, 12, 15) comprend un transducteur (11) pour transformer la pression en un signal électrique et un convertisseur analogique/numérique pour l'affichage numérique de cette grandeur transformée, et pour la prescription numérique d'une valeur de consigne de la grandeur de réglage.

6. Dispositif de fermeture suivant l'une des revendications 1 ou 3 à 5, caractérisé en ce que l'entraînement (5) des mâchoires de soudage et/ou de scellement d'effectue par un élément de pression (26, 28) pneumatique ou hydraulique, auquel le coussin de pression (7) est intégré.

7. Procédé pour faire fonctionner le dispositif de fermeture d'une machine de formation de sachets, à partir d'une bande tubulaire, ayant des mâchoires de soudage et/ou de scellement (1, 2) qui, pour exercer une pression de fermeture, peuvent être appliquées l'une contre l'autre, avec interposition d'un coussin de pression (7), caractérisé en ce qu'il consiste à obtenir, pendant le processus de soudage ou de scellement, une valeur prescrite de la force de pression du coussin de pression (7), par un circuit de commande et de réglage (9 à 17).

Fig. 1

0 192 605

Fig. 2

0 192 605

*Fig. 3*

0 192 605